# EUROPEAN PATENT SPECIFICATION

(11) **EP 3 548 266 B1**
(45) Date of publication and mention of the grant of the patent: **10.05.2023**
(21) Application number: 17825322.5
(22) Date of filing: 05.12.2017
(51) Int. Cl.: B29D 35/06, B29D 35/08, B29D 35/04, A43D 86/00, A43B 13/12, A43B 9/18, A43B 23/02

(54) **OVERMOLD DIRECT ATTACH SOLE**
UMGOSSENE DIREKTBEFESTIGUNGSSOHLE
SEMELLE DE FIXATION DIRECTE DE SURMOULAGE

(30) Priority: 05.12.2016 US 201662430220 P
(43) Date of publication of application: 09.10.2019
(73) Proprietor: Nike Innovate C.V., Beaverton, Oregon 97005 (US)
(72) Inventor: ARCHER, Paul, Beaverton, Oregon 97005 (US); CHAMBLIN, Mike A., Beaverton, Oregon 97005 (US); DEFREES, Luke, Beaverton, Oregon 9700 (US); PETTY, Jeremy M., Beaverton, Oregon 97005 (US); WILLOUGHBY, Julie Ann-Crowe, Beaverton, Oregon 97005 (US)
(74) Representative: Müller-Boré & Partner Patentanwälte PartG mbB
(86) International application number: PCT/US2017/064736
(87) International publication number: WO 2018/106706

(56) References cited:
- US-A- 4 651 444
- US-A1- 2003 182 820
- US-A1- 2005 210 708

## Description

### TECHNICAL FIELD

Aspects provide methods and systems for direct attaching a bottom unit, such as a shoe sole, to an article of footwear.

### BACKGROUND

An article of footwear, such as an athletic shoe, is traditionally formed from an upper and a bottom unit. The upper and the bottom unit are joined together with the use of a bonding adhesive traditionally. However, the use of an adhesive adds additional steps to the manufacturing process, the adhesive can introduce failures into the footwear if the bond is not sufficient, and one or more primers may be used to ensure a bond between materials. Therefore, the use of an adhesive to join an upper and bottom unit can increase manufacturing costs and potential quality concerns.

US 4 651 444 A describes a shoe of the high-upper type that is formed by two slippers of leather or like material and of different size. One slipper is engaged within the other, a metal former is placed within the inner slipper, and the assembly is placed within a mold comprising two halves and a bottom mold block corresponding to the outsole and provided with an injection sprue. The plastic injected through the sprue passes through an injection orifice in the bottom slipper sole, spreads within the internal space between the two slipper soles so as to form the insole, then passes downwards through holes located in uniformly spaced relation in the bottom slipper sole and spreads between the bottom sole and the mold block so as to form the outsole which is thus intimately bonded to the insole. At the same time, the injected plastic flows upwards within the internal space between the two slippers so as to form the upper of the shoe.

US 2005/210708 A1 describes a shoe including an upper made of a waterproof breathable laminate which is composed of at least one outer layer having an inner surface and an outer surface, and a waterproof vapor-permeable membrane laminated to the inner surface of the outer layer; and an inner sole which includes a bottom plate and an inner sidewall extending upwardly from a periphery of the bottom plate.

US 2003/182820 A1 describes a sandal including a molded rubber outsole configured to support a lower surface of a foot including a heel, midfoot, and a forefoot; a toe cap extending from the outsole and configured to cover a top of at least a portion of the forefoot, the toe cap molded integrally with the outsole; and a plurality of sandal straps fixed to the outsole to retain the sandal on the foot, at least one of the sandal straps fixed to the toe.

### SUMMARY

The claimed invention is defined by the independent claims. Additional embodiments are defined in the dependent claims.

### BRIEF DESCRIPTION OF THE DRAWING

The claimed invention is described in detail herein with reference to the attached drawing figures, wherein:
FIG. 1 depicts an exemplary flow diagram for forming an article of footwear, in accordance with aspects hereof;
FIG. 2 depicts an exemplary lasted upper, in accordance with aspects hereof;
FIG. 3 depicts an exemplary midsole core independent of the last upper for illustration purposes, in accordance with aspects hereof;
FIG. 4 depicts the lasted upper of FIG. 2 having the midsole core of FIG. 3 direct attached thereto, in accordance with aspects hereof;
FIG. 5 depicts a shell encapsulating the midsole core and mechanically engaged with the upper of FIG. 4, in accordance with aspects hereof;
FIG. 6 depicts a cross-section of the article of footwear of FIG. 5 along cut line 6-6, in accordance with aspects hereof;
FIG. 7 depicts an exemplary tooling for forming the shell and/or the midsole core with the upper, in accordance with aspects hereof;
FIG. 8 depicts the exemplary tooling of FIG. 7 with a portion removed for illustrative purposes, in accordance with aspects hereof;
FIG. 9 depicts an exemplary system for forming an article of footwear, in accordance with aspects hereof;
FIG. 10 depicts an alternative exemplary system for forming an article of footwear, in accordance with aspects hereof;
FIG. 11 depicts an exploded view of a direct-attached bottom article of footwear, in accordance with aspects hereof;
FIG. 12 depicts a cross sectional view of a direct-attached bottom article of footwear, in accordance with aspects hereof;
FIG. 13 depicts a bottom view of the directed-attached bottomed article of footwear, in accordance with aspects hereof;
FIG. 14A depicts a process for direct attaching a bottom for an article of footwear, in accordance with aspects hereof;
FIG. 14B depicts a footwear upper in a cutaway ring mold for direct attaching a bottom of an article of footwear, in accordance with aspects hereof;
FIG. 14C depicts a core mold for forming a core on the article of footwear from FIG. 14B, in accordance with aspects hereof;
FIG. 14D depicts a shell mold for forming a shell on the article of footwear from FIG. 14C, in accordance with aspects hereof; and
FIG. 14E depicts the article of footwear of FIG. 14D having a direct-attach bottom, in accordance with aspects hereof.

### DETAILED DESCRIPTION

An article of footwear, such as a shoe, sandal, cleat, and the like, is comprised of one or more components. In the examples provided herein, a footwear upper and a bottom unit may form the footwear. A footwear upper, or referred to as an upper for short, is a foot-securing component of the footwear. The upper extends from the bottom unit and secures the bottom unit to a foot of a wearer. The upper may be formed from a variety of materials, such as leather, knit, woven, braided, felted, non-woven, and the like. Similarly, an upper may be made from a single material or a variety of materials. The upper may be a continuous material, a discontinuous material, a cut-and-sew combination, a cut-and-adhere combination, and the like. Therefore, it is contemplated herein that an upper may be formed from a variety of materials (e.g., organic, non-organic) and/or techniques.

A bottom unit is generally positioned between a wearer's foot and the ground. A bottom unit may be referred to as a sole. A bottom unit may be formed from one or more discrete components. For example, as will be provided herein, it is contemplated that the bottom unit is comprised of a midsole core and an encapsulating shell. The midsole core may be a relatively soft material state with a relatively high energy return and the shell may be a material state that provides relatively good traction, abrasions resistance, resistance to ultraviolet light degradation, resistance to hydrolysis, resistance to slit tear, and the like. In this example, a combination of the midsole core and the shell provide an effective bottom unit construction for implementation in an article of footwear. The components of a bottom unit may be formed from a variety of materials as will be discussed hereinafter. Those materials include, but are not limited to, polymer-based materials (e.g., polyurethane ("PU"), thermoplastic polyurethane ("TPU"), silicone, ethylene-vinyl acetate ("EVA")), rubber, and other materials suitable for use as a bottom unit.

Traditional footwear manufacturing may attach a bottom unit with an upper using a variety of adhesives. However, as the materials forming the bottom unit and the upper may be of different compositions and characteristics, an adhesive that is effective for one of the materials may not be effective for another material. Therefore, special additives, primers, surface treatments, and the like may be relied on to join incompatible materials allowing the bottom unit to be affixed to the upper. The addition of the supplemental materials and/or processes can increase the cost and time to join an upper and a bottom unit. Aspects hereof contemplate joining an upper with a bottom unit without traditional adhesives and primers, but instead relying on a direct attach method as will be provided hereinafter.

As will be discussed in greater detail throughout, the direct attach of the bottom unit and the upper is accomplished, at least in an exemplary aspect, through a manufacturing process where a midsole core unit and an upper are over molded with a shell. The over molded shell mechanically engages with the upper to form a coupling (e.g., joining). For example, a fluid-like state material (e.g., PU above a glass transition temperature, TPU above a glass transition temperature, and/or silicone) may be introduced into tooling that maintains an upper and a midsole core in relative positioning and also provides mold surfaces for the shell material. As the fluid-like state material transitions to a cured (e.g., non-fluid-like state) state, the shell material mechanically interacts with the upper to physically (and/or chemically) bond. For example, the upper may include a plurality of fibers and/or apertures that the liquid-like state material passes through and embeds with such that when it cures, an entanglement/entwinement/encapsulation of the shell material and the upper occurs to physically bond the two without an adhesive. Direct attach is a term applied to joining of component without the use of adhesives. For example, over molding two components is a method of direct attaching the components as the over molding material serves as a joining material.

Similarly, the over molding process encapsulates the midsole core within the shell material. The encapsulated midsole core is therefore coupled with the upper by way of at least the shell material's bond with the upper. It is also contemplated that the midsole core may be temporarily or permanently joined with the upper prior to introduction of the shell material. For example, the midsole core itself may be formed to mechanically (and/or chemically) bond with the upper. For example, the midsole core may also be formed from a liquid-like material that is molded while physically interacting with and therefore mechanically engaging with the upper. In an exemplary aspect the midsole core is cast molded or injection molded directly to the upper causing a mechanical interaction with the upper to physically bond the two components. Alternatively, it is contemplated that the midsole core is formed (e.g., pre formed, such as a foam component or an airbag) and then introduced to the upper along with one or more adhesives to maintain the midsole core in an intended relative position to the lasted upper for the shell formation process. In this example, the shell formation that over molds the midsole core and upper supplements the otherwise potentially insufficient bond between the midsole core and the upper.

Further, as will be discussed in greater detail hereinafter, the materials forming the midsole core and the shell are different (e.g., silicone based and PU based).

The method of forming an article of footwear that includes lasting a footwear upper. Lasting of a footwear upper includes extending an upper around a cobbler's last (also referred to as a "last" hereinafter) to dimensionally shape the upper into a shape defined by the last. The method continues with forming a midsole core to at least an underfoot portion of the footwear upper. The midsole core is direct attached to the footwear upper through the forming. The method also includes forming a shell to the midsole core and a portion of the footwear upper concurrently. The shell encapsulates the midsole core forming an exterior surface on the midsole core. The forming of the shell is accomplished through a molding process (e.g., casting, injection) that molds the shell around the midsole core and a portion (e.g., below a biteline region) of the lasted upper.

The article of footwear comprises an upper having an underfoot portion. The footwear also includes a midsole core that is direct attached to the upper at the underfoot portion such that the midsole core mechanically engages (e.g., elements of the upper extend into the midsole core) the upper. The article of footwear also includes a shell that encapsulates the midsole core and mechanically engages the upper. The shell forms a ground-contacting surface (e.g., bottom of a shoe) of the article of footwear.

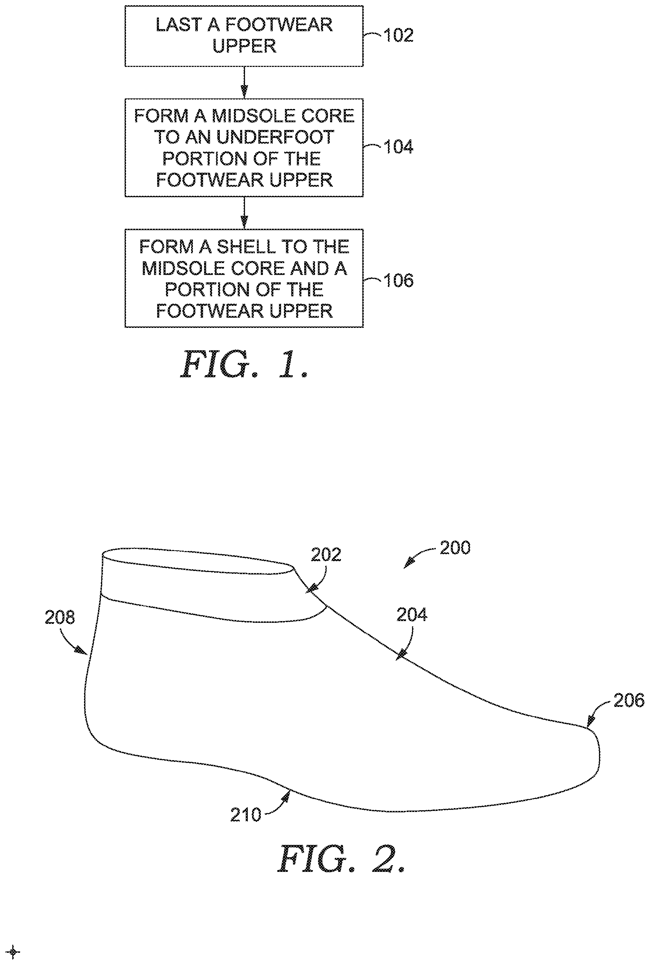

Turning to the figures and FIG. 1 specifically that depicts a method of forming an article of footwear having a direct attach bottom unit to an upper. The method starts with a block 102 representing lasting a footwear upper. As previously provided, lasting of a footwear upper includes positioning an upper around, at least in part, a last. The lasting process may vary depending on the upper configurations, the materials forming the upper, and the like. However, lasting generally includes insertion of a last into an internal cavity formed by the upper. The internal cavity is sometimes referred to as a foot-receiving cavity when the footwear is completed. The last provides a form about which the upper is shaped prior to having the bottom unit (e.g., sole, plate, cleat) attached. The last may be formed from a variety of materials including polymer-based material, metallic-based materials, organic materials, and the like.

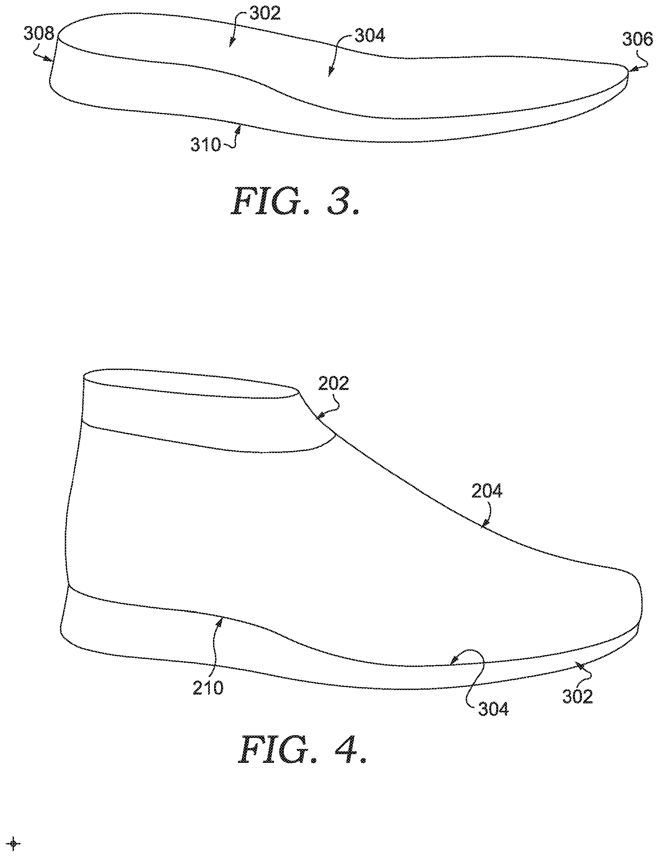

A block 104 provides for forming a midsole core to an underfoot portion of the footwear upper. The underfoot portion of the upper is an inferior (e.g., bottom) portion of the lasted upper that is typically attached to a bottom unit. The underfoot portion is depicted in FIG. 2 as underfoot portion 210 hereinafter. The midsole core, such as a midsole core 300 of FIG. 3, may be formed from a variety of materials. For example, it is contemplated that the midsole sole core may be fore from a PU, TPU, EVA, silicone-based material, and the like. In an exemplary aspect, the midsole core is formed from a material that provides a sufficient energy return for use in a bottom unit to an article of footwear. Characteristics of the midsole core may include a material having a density that is less than 0.25 grams per cubic centimeter (g/cc). The midsole core may also have a resilience rebound of greater than 60% (e.g., an object dropped on the material returns to at least 60% of the drop height). The midsole core may also have a compression set of less than 20%, where compression set is the deformation that remains in the material after removal of a compressive force. Different methodologies are known for testing these factors in association with an elastomeric material, such as those contemplated for the midsole core.

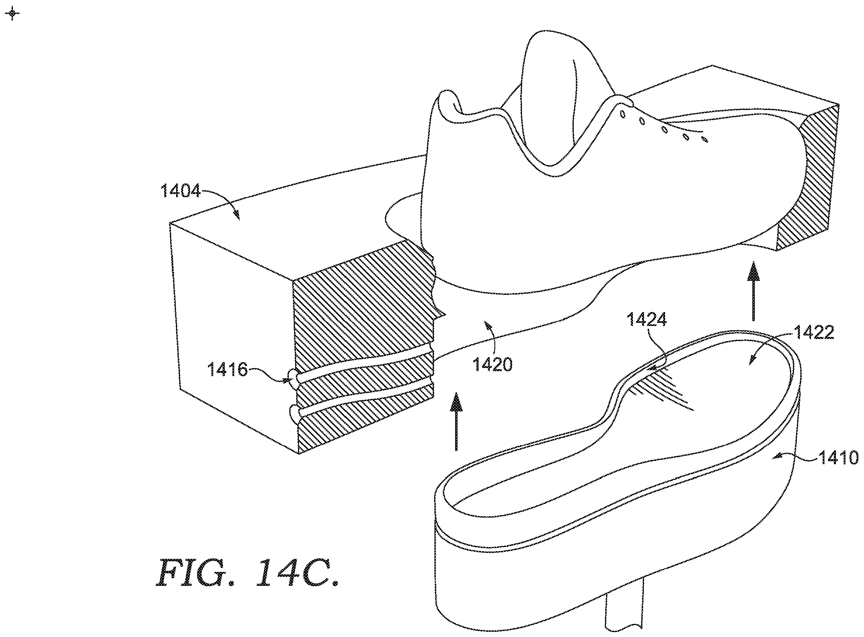

The forming of the midsole core is contemplated as including a variety of forming techniques. For example, it is contemplated that the midsole core is molded to the lasted upper. The molding process may include an open casting molding process. The molding operation may also include an injection molding operation. The molding operations leverage a tooling configuration in which the last having the upper lasted thereon is positioned in the tooling such that the material to form the midsole core is deposited therein to form the midsole core. For example, in the open casting of the midsole core, the lasted upper may be positioned such that the underfoot portion of the lasted upper is positioned in a cavity location intended to filled with the midsole core material. By positioning the underfoot portion within a molding volume, the midsole core material forms around and mechanically engages with the lasted upper underfoot portion to direct attach the midsole core and the upper, as depicted in FIG. 4 hereinafter. A similar configuration is also contemplated for injection molding where the underfoot portion of the upper is exposed to a molding volume of an injection mold tooling, as will be depicted in FIG. 14C hereinafter.

In yet another example, the midsole core may be formed independently from a direct attach operation where a shell is formed around the lasted upper and the core. For example, a core may be formed in other locations or operations and then introduced into the process prior to direct attaching the shell. The core, for example, may be a gas-filled bladder that is substantially gas impervious. For example, air bags and other bladders are known in the footwear industry. An airbag may be used in connection with aspects provided herein as the core or as a portion of the core. The airbag may then be over molded and encapsulated or covered by a shell direct attached to the upper. In this example, the shell may serve as a bonding agent to secure the airbag with the upper. Therefore, while foamed material may serve as a core, it is also contemplated that additional materials and structures (e.g., an airbag) may alternatively serve as a core.

The material forming the midsole core may be any suitable material. In an exemplary aspect, a liquid state (e.g., uncured) polymer is introduced into a mold also containing the upper. The polymer is cured into the shape of the midsole core while mechanically engaging with the upper for a direct attach bond that results from the forming process and not a post-forming adhesion. Alternatively, it is contemplated that a particulate matter (e.g., polymer-based powder and/or beads) is introduced to a tooling having the upper secured therein. The particulate material is formed into the core, such as through application of heat or an activating agent that causes a bond between the particulate matter that results in formation of the core direct attached to the upper.

The midsole core may also be formed as a variety of states. For example, it is contemplated that the midsole core is formed as a foamed PU, foamed TPU, foamed EVA, or foamed silicone-based material. The foam may be created through inclusion of a foaming agent during the forming process. The foam may also be formed through a variety of traditionally known process such that the process allows for direct attach to the upper, in an exemplary aspect.

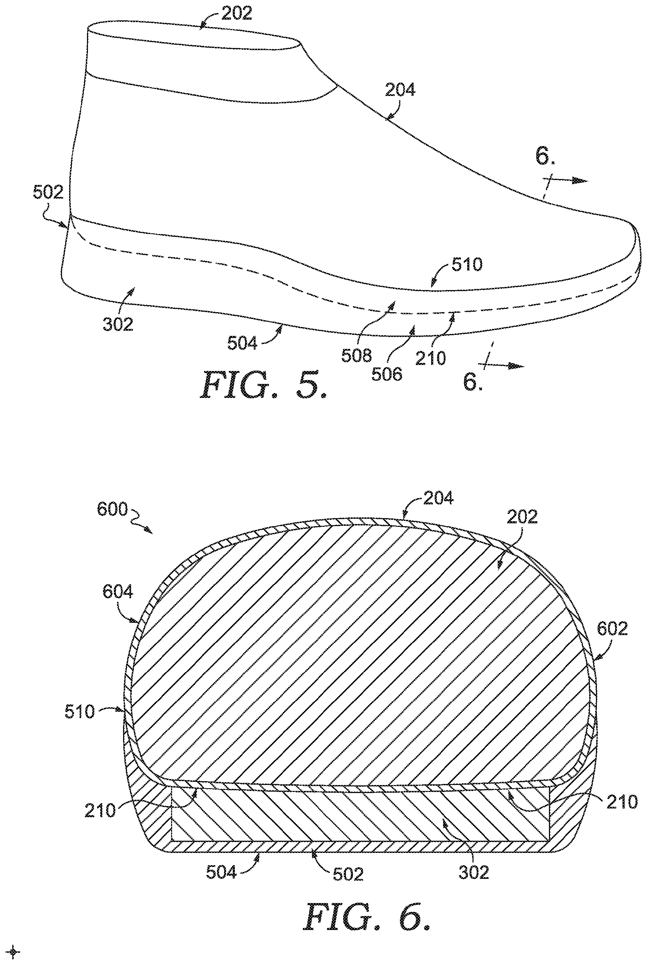

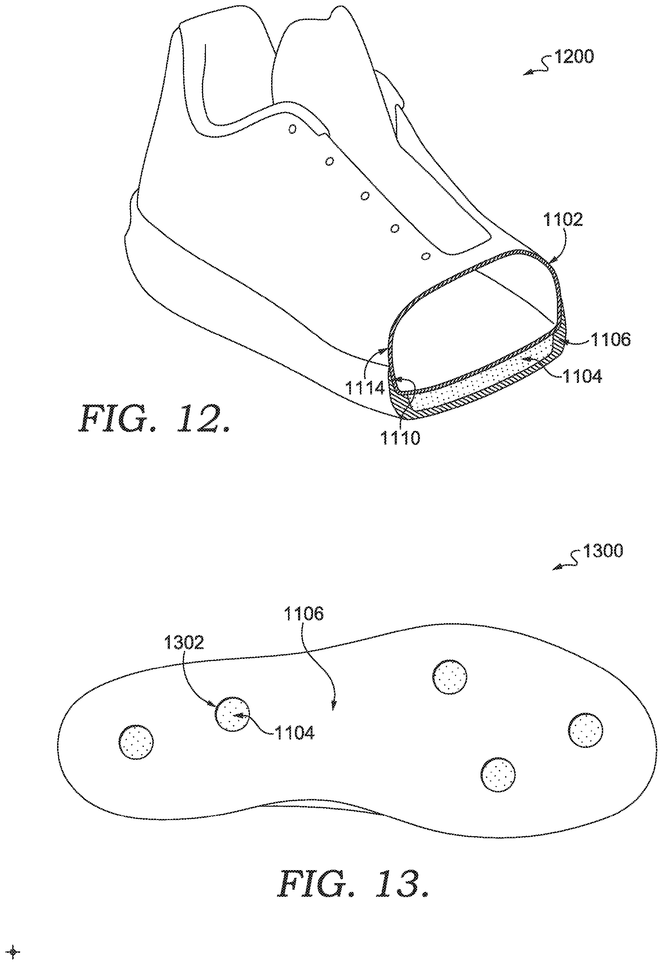

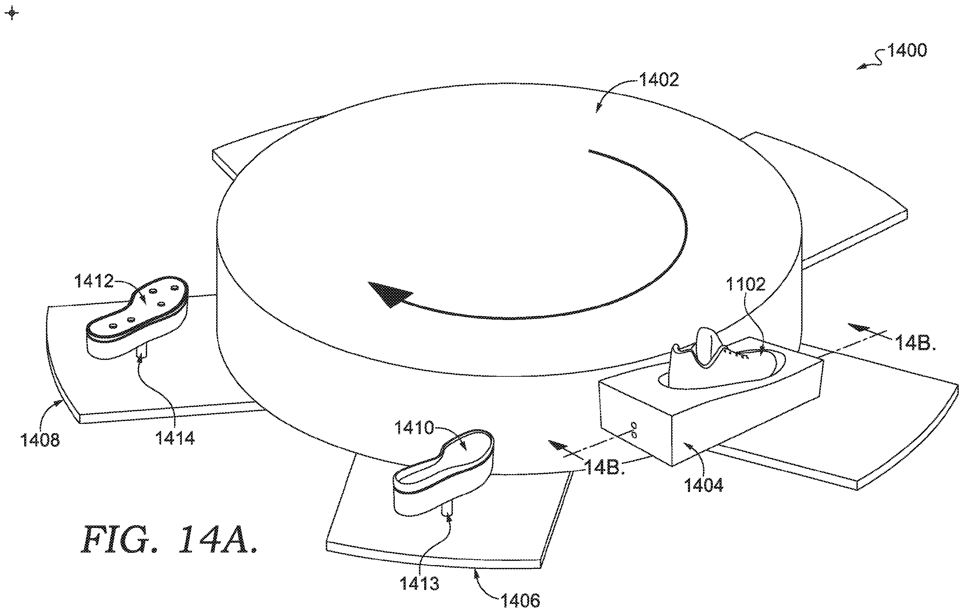

Block 106 of FIG. 1 depicts the forming of a shell to the midsole core and a portion of the footwear upper. As previously provided, it is contemplated that the shell is over molded to encapsulate (or substantially encapsulate as depicted in FIG. 13 hereinafter) the midsole core and to mechanically engage with the upper, as depicted in FIG. 5 hereinafter. The shell is formed through a molding process. For example, it is contemplated that the lasted upper having the midsole core attached are positioned within an injection mold tooling that positions the upper and midsole core in an appropriate relative position to the mold such that a shell is formed that encapsulates the midsole core and mechanically engages with the upper. This tooling may be a second tooling from used in the block 104, it may be the same tooling, or it may a partial use of the tooling (e.g., FIGs. 14A-14E).

The shell may be formed from a variety of materials, such as elastomeric polymers. Examples include, but are not limited to PU, TPU, EVA, silicone-based materials and the like. The shell is formed from different materials than the midsole core. In an exemplary aspect, the midsole core is formed from a foamed PU and the shell is formed from a non-foamed PU (or at least a PU having a greater density than the PU forming the core). Alternatively, the midsole core may be formed from a silicone-based foam and the shell may be formed from as PU. Further yet, it is contemplated that the core may be formed from a foamed silicone and the shell from a silicone (or at least a silicone having a greater density than the silicone forming the core).

Further yet, it is contemplated that the shell is formed from a material that has a better coefficient of friction to ground surfaces (e.g., traction), a better abrasion resistance, a better resistance to hydrolysis, a better resistance to ultraviolet light degradation (e.g., discoloration, material failure), and/or a higher density than the midsole core. The shell material may have an abrasion resistance less than 0.5 cubic centimeters. Abrasion resistance may be tested by a variety of methodologies, such as but not limited to, ISO 23794:2003 or ASTM D1630 (2016). The shell may also have a split tear that is greater than 2.5 kg/cm. Tear strength may be determined by a variety of methodologies, such as but not limited to, ASTM D3574 (2016) or ASTM D624 (2016).

The shell may be formed such that all or substantially the entire midsole core is encapsulated within the shell. Encapsulation includes enclosing the midsole core exposed surfaces (e.g., surfaces not already direct attached or contacting the upper) with the shell material. An encapsulation of the midsole is depicted in the cross section view of FIG. 6 hereinafter. Because the midsole core is encapsulated by the shell material, the midsole core material may not be limited to include certain factors (e.g., UV resistance, porosity, abrasion resistance) to be effective while exposed to external conditions (e.g., environmental weather and conditions) typically experienced by an exterior surface of an article of footwear. As such, the multi-component bottom unit provided herein may be superior to traditional stock fit sole formed from a common material in a common operation that compromises to achieve characteristics at an internal portion that would also be suitable for external use even though the internal portion is not exposed to external factors.

However, as will be discussed in greater detail hereinafter, it is contemplated that one or more windows may be formed in the shell to expose one or more portions of the midsole core to the exterior. For example, one or more apertures may extend through the shell sidewalls (e.g., portions of the shell extending from the ground-contacting surface to the upper) that allow for visibility of the midsole core. This visibility can allow for confirmation of the midsole core state (e.g., compressed, expanded) or it can provide for an intended aesthetic. Further, it is contemplated that one or more apertures may extend through the ground-contacting surface of the shell to expose a portion of the midsole core to the exterior proximate the ground when in an as-worn configuration.

In an example not covered by the claims, the midsole core may be formed from a foamed silicone composition and the shell may be formed from a silicone composition (e.g., one having a greater density than the silicone midsole core). Having the same material forming the midsole core and the shell may lead to greater bonding affinity between the midsole core and the shell, such as the case of a silicone midsole core with a silicone shell. This is in contrast, for example. To an EVA midsole core having a lower bonding affinity with a silicone shell without additional surface treatments. Additionally, a silicone-based midsole core and shell may have a reduced tooling cost as temperatures at which silicone-based materials are molded may be lower than other materials, such as EVA. For example, silicone molding may be a no-heat (i.e., additional thermal energy from ambient conditions) operation while other polymer materials may be molded under additional heat conditions, which can increase tooling costs to handle the increased thermal exposure. Further, pressures experienced by tooling during formation of the midsole core and/or the shell may be less for silicone than other materials, such as EVA. Therefore, less expensive tooling may be used in connection with a silicone component formation. For aspects that contemplated a common mold ring as discussed hereinafter, if both the midsole core and the shell are formed from materials having similar processing and forming parameters, the tooling can be designed and built for those common parameters instead of the parameters for a more stringent processing material.

FIG. 2 depicts an exemplary lasted upper 200, in accordance with aspects hereof. The last 202 is inserted into an internal volume formed by an upper 204 having a toe end 206 and an opposite heel end 208. An underfoot portion 210 is also depicted. Like a traditional article of footwear, the lasted upper 200 also has a medial side and an opposite lateral side. The upper 204 is generically depicted and it is understood the upper provided herein may be of any configuration and include any number of components not specifically depicted in the figures hereof. For example, it is contemplated that the upper 204 may be (but not necessarily) comprised of a tongue, a forefoot opening, an ankle collar, a lacing system, one or more apertures, a toe box, a heel counter, and the like.

FIG. 3 depicts the midsole core 302, in accordance with aspects hereof. The midsole core 302 is depicted in a traditional bottom unit configuration; however, it is contemplated that a midsole core may be comprised of two or more discrete elements. The discrete elements may be adapted for a particular location and/or characteristic. For example, a portion in a toe region of the article of footwear may have a different resilience or other characteristic from a portion in a heel region to provide a defined weight characteristic or energy return result, in an exemplary aspect. As depicted, the midsole core has a foot-facing surface 304 that is oriented toward a receiving cavity in the upper when in a traditional as-worn configuration. The midsole core 302 has an opposite ground-facing surface 310 from the foot-facing surface 304. The midsole core 302 has a toe end 306 and an opposite heel end 308. The midsole core 302 also had a medial side and an opposite lateral side. While the midsole core 302 is depicted as having a traditional sole-like configuration, as previously provided, it is contemplated that the midsole core may be of any shape, size, and/or combination of connected or discrete elements. Furthermore, it is contemplated that the midsole core may be comprised of one or more fluid-filled cavities (e.g., gas having a pressure greater than ambient pressure).

FIG. 4 depicts the upper 204 lasted on the last 202 with the midsole core 302 mechanically engaged with the upper 204, in accordance with aspects hereof. In this example, the underfoot portion 210 interfaces with the foot-facing surface 304. The interface between the upper 204 and the midsole core 302, in an exemplary aspect, is without a traditional adhesive or primer. Instead, it is contemplated that a mechanical bond is formed through an engagement of materials (e.g., fibers) of the upper 204 and the material forming the midsole core 302. As previously discussed, it is contemplated that the midsole core 302 may be formed, such as open cast molding with the lasted upper 204 positioned such that the material forming the midsole core 302 interacts with the upper 204 to cause the mechanical interaction (e.g., entanglement of portions of the upper 204 by the material forming the midsole core 302). Alternatively, in an exemplary aspect, an adhesive may be used to bond, at least temporarily until an over molding by the shell may be performed, the midsole core 302 with the upper 204.

FIG. 5 depicts a subsequent step in the forming process with an over molding by a shell 502, in accordance with aspects hereof. The shell 502 forms an exterior surface to the encapsulated midsole core 302. The shell 502 therefore may form a ground-contacting surface 504 for the article of footwear. A portion 506 of the shell 502 covers the midsole core up to the intersection between the midsole core 302 and the upper 204 at the underfoot portion 210. Above the underfoot portion 210, the shell 502 engages with and covers the upper 204 at a portion 508. The shell extends up to a biteline 510 that represents the transition from the shell 502 to the upper 204 forming an exterior surface of the article of footwear.

FIG. 6 depicts a cross section 600 along cut line 6-6 of FIG. 5, in accordance with aspects hereof. The cross section 600 depicts the upper 204 lasted around the last 202. The midsole core 302 is direct attached to the upper 204 at the underfoot portion 210. The shell 502 surrounds and encloses the midsole core 302. The shell 502 forms an exterior surface of the bottom unit, such as the ground-contacting surface 504. The shell 502 over molds both the midsole core 302 and a portion of the upper 204 up to the biteline 510. The shell 502 extends around and forms a perimeter of the article of footwear along a toe end, a medial side 604, a heel end, and a lateral side 602, in an exemplary aspect. While FIG. 6 depicts a symmetry between the medial side 604 and the lateral side 602, it is contemplated that the biteline 510 may be positioned at any location on the upper 204 along the perimeter to provide an aesthetic and/or functional result. It is also contemplated that the biteline 510 forms a continuous perimeter around the article of footwear. The continuous perimeter provides structural continuity for bonding the bottom unit with the upper to resist peeling or other potential failures, in an exemplary aspect.

The shell 502 may form functional regions on the upper 204, in exemplary aspects. For example, a toe box may be formed with the shell 502 material to provide an enhanced abrasion resistance and/or permeability barrier, in an exemplary aspect. Similarly, it is contemplated that the shell 502 may form a heel counter-like element at the heel end to supplement structural elements of the article of footwear, in an exemplary aspect. Additional functional zones are contemplated for extending the shell 502 beyond a mere bottom unit coupling location of the upper 204 in aspects.

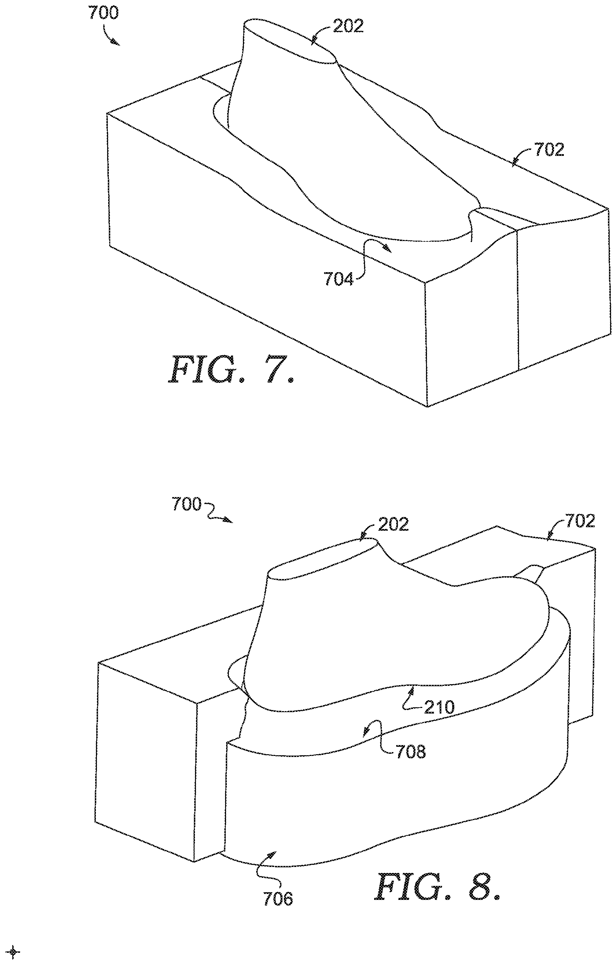

As will be described in greater detail at FIGs. 7 and 8, the tooling for forming the midsole core and/or the shell may comprise one or more mold elements. For example, FIG. 7 depicts a multi-part mold 700 for forming the shell on the lasted upper and midsole core, in accordance with aspects hereof. The last 202 is also depicted as an integral part of the multi-part mold 700. For example, individual portions, ring 702 and ring 704, may be configured for the last 202 to form the shell at an intended location relative to the last 202 and the upper secured thereon. In this example, the ring 702 and the ring 704 may form a molding surface for forming a portion of the shell, such as sidewall portions of the shell. Further, the ring 702 and the ring 704 may also serve as a portion of the tooling for a previous operation of molding (or otherwise forming or securing) the midsole core with the upper.

FIG. 8 depicts the multi-part mold 700 having the ring 704 removed, in accordance with aspects hereof. The multi-part mold is further comprised of a portion 706 having a surface 708. The portion 706 may be referred to as a bottom plate in the multi-part mold. The surface 708 may include molding patterns to form traction elements, such as treads, on a ground-contacting surface of the shell. Additionally, depending on the configuration of the article of footwear, one or more portions of the multi-part mold 700 may be supplemented to achieve a variation in the over molding outcome. For example, a common last and upper may be formed with different bottom units by adjusting a midsole core used (e.g., size, material configuration) and/or adjusting a shell characteristics (e.g., material, size, shape, position) formed by a shell bottom plate. These changes may be accomplished through a substitution of one or more portions of the multi-part mold 700.

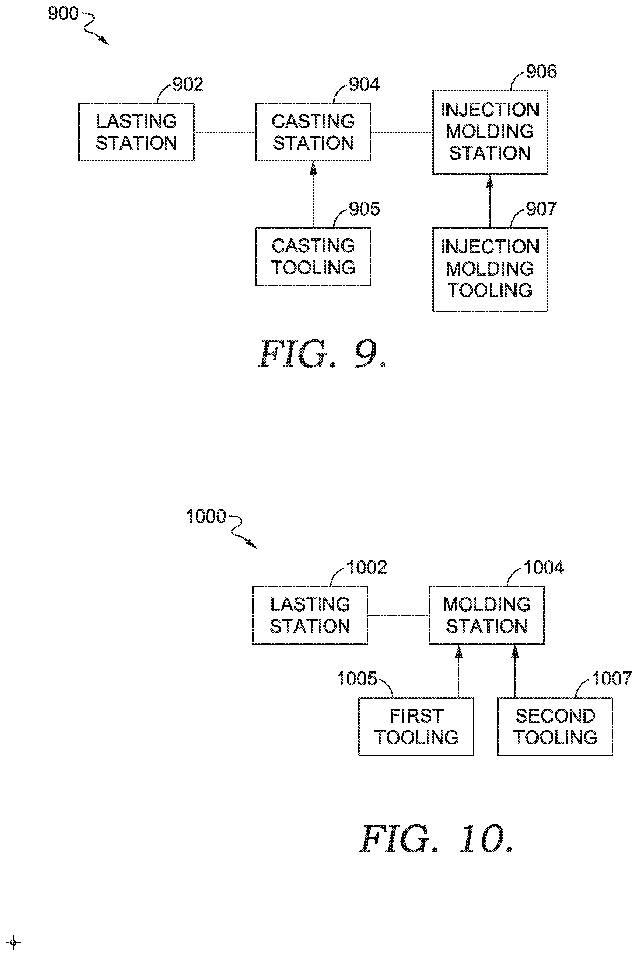

FIG. 9 depicts an exemplary system 900 for forming an article of footwear, in accordance with aspects herein. The system 900 is comprised of a lasting station 902. An upper lasted on a last at the lasting station 902. The lasted upper is then transferred to a casting station 904. The casting station, in this exemplary system, receives casting tooling 905 into which the lasted upper is secured. The casting station 904 allows for the forming of the midsole core that is direct attached to the upper through an open casting process using the casting tooling 905. Following the forming of the midsole core in connection with the lasted upper, the combination is transferred from the casting station 904 and the casting tooling 905 to an injection molding station 906. The injection molding station 906 receives injection molding tooling 907. The lasted upper with the direct attached midsole core is positioned in the injection molding tooling in order for a shell to be formed thereon. A material, such as PU, may be injected into the injection molding tooling 907 to form the shell. The shell may therefore be formed by a liquid material, such as an uncured PU, surrounding and consequently encapsulating the midsole core. The liquid material may also over mold the upper up to a biteline. The over molding of the upper with the liquid material allows the liquid material to mechanically engage with the upper, such as through infiltrating voids or surfaces of the upper prior to curing. Once cured or otherwise solidified, the shell material forms a bond, such as a physical bond through mechanical interaction, with the upper allowing for a direct attach of the bottom unit to the upper.

FIG. 10 depicts an alternative exemplary system 1000 for forming an article of footwear, in accordance with aspects herein. The system 1000 has a lasting station 1002, such as the lasting station 902 of FIG. 9. A lasted upper is then transferred to a molding station 1004. The molding station 1004 may be a common station for forming both the midsole core and also for forming the shell, in an exemplary aspect. For example, a common machine may be capable of forming both the midsole core and the shell in connection with varied tooling. For example, a first tooling 1005 may be used to form the midsole core. The first tooling may be open cast tooling, injection molding tooling, or the like. A second tooling 1007 may subsequently be introduced to form the shell at the molding station 1004. The second tooling 1007 may be any type of tooling, such as injection molding tooling or casting tooling.

The system 900 of FIG. 9 and the system 1000 of FIG. 10 are exemplary in nature and are not limiting. It is contemplated that additional stations may be present as well as additional components at a particular station. Further, it is contemplated that alternative tooling may be implemented at a given station. Further, while a specific process is listed at a given station (e.g., casting at the casting station 904 of FIG. 9), alternative or additional processes may be performed at the station (e.g., injection molding).

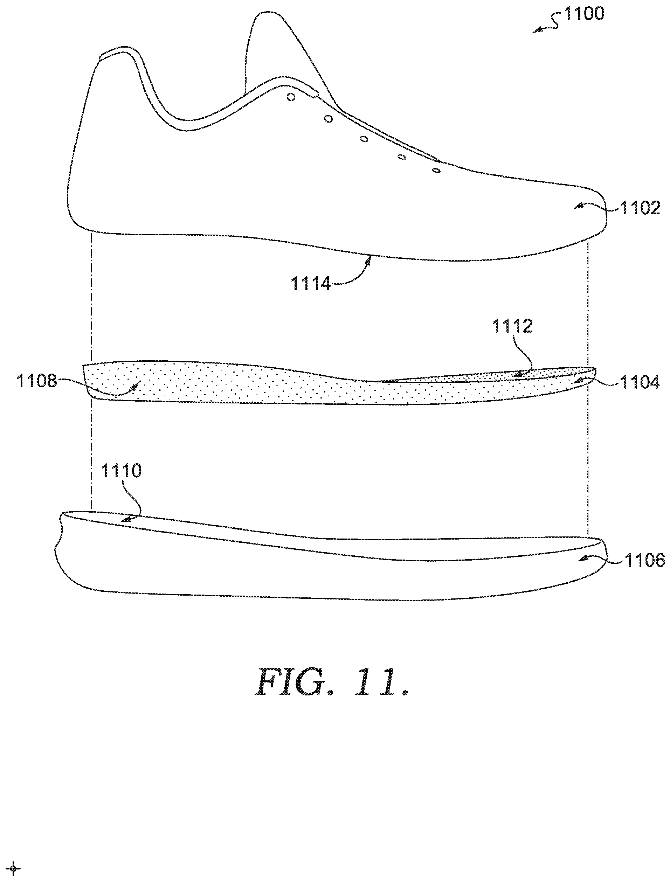

FIG. 11 depicts an exploded view of an article of footwear 1100 (e.g., shoe) having a midsole core 1104 and a shell 1106. The midsole core 1104 and the shell 1106 form a bottom unit. As provided herein, a bottom unit may be a sole, a plate, a traction surface, or the like. A bottom unit serves as a ground-contacting surface for the article of footwear. An upper 1102 is also depicted. The bottom unit is direct attached to the upper 1102. Direct attach, as also provided herein, is the joining of the bottom unit with the upper 1102 in the absence of a primer or adhesive for compatible materials. Direct attach may include the use of a primer or other surface treatment (e.g., plasma treatment) to aid in the joining of the upper and the bottom unit in some examples. Direct attach, as implied by the name, is the direct attaching of the bottom unit to the upper without the use of material having a sole purpose of joining (i.e., adhesive). A sole purpose joining material is in contrast to, for the example, the shell 1106, which not only joins the bottom unit with the upper 1102, but the shell 1106 also provide a functional purpose of a ground contacting material, an encapsulating material of the midsole core 1104, an impact attenuating material, and/or the like.

In some aspects, the midsole core 1104 is direct attached to the upper 1102. Direct attach of the midsole core 1104 may be accomplished through a molding operation (e.g., injection or casting) of the midsole core 1104 onto the upper 1102. An exemplary molding operation will be discussed in connection with FIG. 14C hereinafter.

In an alternative aspect, it is contemplated that the midsole core 1104 is pre-formed. For example, the midsole core 1104 may be formed as an airbag or a previously molded foamed article. In this example, it is contemplated that the midsole core 1104 may be permanently attached, temporarily attached, or not attached at all to the upper 1102 prior to forming the shell 1106. For example, an adhesive with sufficient bonding capacity may be applied to the midsole core 1104 at a foot-facing-surface 1112 to join with a ground-facing portion of an exterior surface 1114 of the upper 1102. Alternatively, it is contemplated that a tack adhesive for temporarily positioning, but without sufficient adhesion capacity for permanent bonding, may be used between the foot-facing surface 1112 and the ground-facing portion to position the midsole core 1104 relative to the upper 1102 during a shell forming operation. Additionally, tooling used to form the shell 1106 may include a cavity or other feature able to position the midsole core 1104 in an appropriate position relative to the upper 1102 during the shell forming process to prevent the use of an adhesive. In all of the example, it is contemplated that an encapsulation of the midsole core 1104 by the shell 1106 direct attaches the bottom unit to the upper 1102 regardless of if adhesive is leveraged to permanently or temporarily join the midsole core 1104 and the upper 1102. The shell 1106 direct attaches at an inside surface 1110 of the shell 1106 to an exterior surface of the upper 1104.

Direct attach may also include the direct attach of the shell 1106 with the midsole core 1104. For example, it is contemplated that a mechanical and/or chemical bond may be formed between materials forming the shell 1106 and the midsole core 1104 to form a unified bottom unit. While some materials (e.g., EVA) may not have a natural and standalone affinity to join with other materials forming the article of footwear without adhesive, it is contemplated that one or more surface treatments or arrangements allow for direct attach to occur. For example, it is contemplated that a plasma treatment or other surface treatment may prepare a first material to join with and therefore direct attach with a second material.

FIG. 12 depicts a cross sectional view 1200 of the article of footwear 1100 from FIG. 11, in accordance with aspects hereof. The cross section illustrates the interaction of the bottom unit comprised of the midsole core 1104 and the shell 1106 with the upper 1102. Specifically, the shell 1106 over molds and encapsulates the midsole core 1104. Additionally, the shell 1106 over molds at least a portion of the upper 1102 such that the interior surface 1110 engages with and joins the upper 1102 at the exterior surface 1114.

While not depicted at the scale represented in the figures, it is contemplated that a transfer of shell material forming the shell 1106 extends into and mechanically engages with the upper 1102. For example, a molding operation may inject material forming the shell 1106 in a liquid state that has sufficient fluidity and viscosity to penetrate and/or infiltrate at least a portion of the material forming the upper 1102 to form a direct attach bond. A similar co-mingling of material is also contemplated at the transition between the midsole core 1104 and the upper 1102, in some examples. Further, it is contemplated that a material transition may occur between the midsole core 1104 and the shell 1106 for some materials used to form the same.

FIG. 13 depicts a bottom view 1300 of the article of footwear from FIGs. 11 and 12, in accordance with aspects hereof. In this non-limiting aspect, it is contemplated that one or more windows 1302 may be formed in the shell 1106. The windows may be an aperture that extends through the shell to expose an underlying material, such as the midsole core 1104. The window 1302 provides access to the midsole core 1104 from an exterior. This access allows for visual inspection of the materials, intended aesthetics (e.g., material color contrast), reduction in material used to form the shell 1106, and the like. It is contemplated that a window may be any size, shape, location, and/or quantity. As previously discussed, it is contemplated that the window may be on a ground-contacting surface and/or a sidewall. Further, it is contemplated that the window may expose a window (e.g., void, aperture) in the midsole core 1104 allowing for inspection or access to the upper 1102 through the bottom unit in an exemplary aspect.

FIG. 14A illustrates an exemplary system 1400 for direct attaching a bottom unit with an upper, in accordance with aspects hereof. The system 1400, in this example, is comprised of a carousel 1402 having a variety of stations performing various operations, such as molding operations. It is understood that the system 1400 is illustrative and not restrictive. The system 1400 is provided to facilitate a discussion of direct attaching a bottom unit to an upper and it is not intended to be limiting.

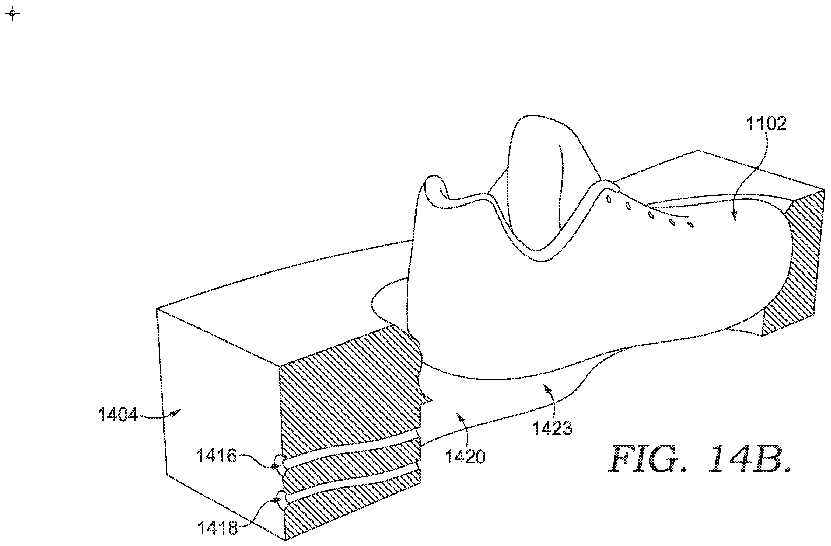

A ring mold 1404 is depicted securing an upper 1102. As previously discussed with reference to FIGs. 2-8, the upper 1102 may be lasted and the ring mold 1404 may secure around the lasted upper such that a portion of the lasted upper becomes a molding surface onto which the midsole core and/or shell are formed. The relative position of the ring mold 1404 and the upper 1102 will be depicted in FIGS 14B-E as cross-sectional views of the ring mold 1404 along a cutline 14B-14B. As can be appreciated, it is contemplated that the ring mold 1404 may be comprised of a first ring portion on a first side of the cutline 14B-14B and a second ring portion on a second side of the cutline 14B-14B. The two ring mold portions may separate along this line to accept a lasted upper and to secure around the lasted upper, in an exemplary aspect.

The ring mold 1404 is advanced by the carousel 1402 to a core station 1406 where the midsole core is formed and direct attached to the upper 1102, in an exemplary aspect. The midsole core may be formed through the insertion of a core bottom plate 1410 that is positioned by an actuator 1413 (e.g., pneumatic, electric, hydraulic) into a cavity of the ring mold 1404, as best seen in FIG. 14C hereinafter. The core bottom plate 1410 is sized to form the midsole core within the ring mold 1404 onto a bottom surface of the upper 1102. As will be discussed in greater detail, the core bottom plate 1410 may be partially inserted into the ring mold 1404 and a material (e.g., PU, TPU, EVA, silicone) may be injected into the ring mold in a cavity formed between the core bottom plate 1410 and the upper 1102. The core bottom plate 1410 may then be further inserted (e.g., raised) into the ring mold 1404 following the injection of the core material by the actuator 1413. The core bottom plate 1410 may be positioned within the ring mold 1404 relative to the upper 1102 such that a volume of space defined by the core bottom plate 1410 and the upper 1102 defines the size and shape of the midsole core mold.

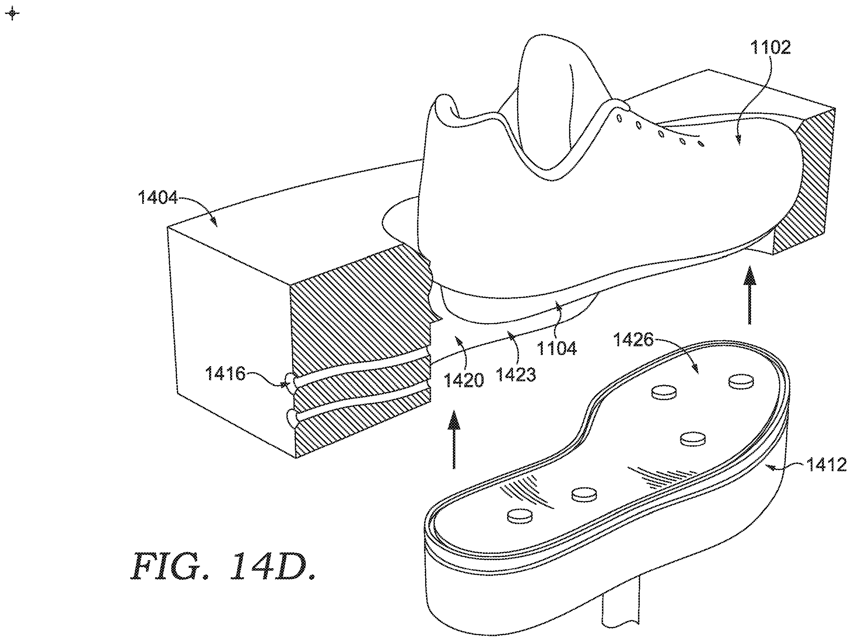

The system 1400 may then advance the ring mold 1404 having the upper 1102 and a midsole core to another station, such as a station 1408 for forming a shell over the midsole core and onto the upper 1102. A shell bottom plate 1412 is sized and shaped to be received in the ring mold 1404, as best seen in FIG. 14D hereinafter, for forming the shell. The shell bottom plate 1412 may be actuated in to position within the ring mold 1404 by an actuator 1414 (e.g., pneumatic, electric, hydraulic). When positioning the shell bottom plate 1412 in the ring mold 1404, a relative position between the shell bottom plate 1412 and the upper 1102 having the midsole core defines the shell to be formed. After inserting the shell bottom plate 1412 at least partially into the ring mold 1404, the system 1400 injects a shell material forming a shell direct attached to at least the upper 1102.

It is contemplated that the system 1400 may include additional components, such as injection machines, casting machines, material repositories, pressure tanks, cooling stations, heating stations, and the like. Further, it is contemplated that some stations may be for cast molding and some stations may be for injection molding. Any combination of stations in any order is contemplated to direct attach a bottom unit to an upper in accordance with aspects hereof.

FIG. 14B depicts a cross section of the ring mold 1404 having the upper 1102 secured therein, in accordance with aspects hereof. A cavity 1420 is present in the ring mold 1404 for receiving one or more bottom plates (e.g., the core bottom plate 1410, the shell bottom plate 1412 both of FIG. 14A). An internal side wall 1423 is also formed by the ring mold 1404 within the cavity 1420. The internal side wall 1423 may serve as a guide for positioning a bottom plate (e.g., the core bottom plate 1410) or it may serve as a molding surface for other bottom plates (e.g., shell bottom plate 1412). Therefore, the ring mold 1404 secures the upper 1102 to form an upper molding surface (e.g., the ground-facing surface of the upper 1102) and to serve as either a molding surface and/or as a guide surface for other molding portions.

Material may enter into the cavity 1420 through a variety of mechanisms. For example, a first gate 1416 and a second gate 1418 are depicted providing access for material to be inserted from the exterior into the cavity. It is understood that the gates could be positioned at any location and have any size. Further, while two gates are depicted, a single gate is effective for aspects hereof. Additionally, while the gates are depicts at a heel end of the bottom unit, is it contemplated that the gates may be at a toe end, a medial side, a lateral side, and the like.

With respect to the first gate 1416 and the second gate 1418, it is contemplated that the first gate 1416 is a gate used for one of the midsole core or the shell and the second gate 1418 is for the other of the midsole core or the shell, in an exemplary aspect. As different materials are used (or different compositions of a common based material), a different gate structure (e.g., size, location, length, shape) may be leveraged for the different materials. Similarly, it is contemplated that only a single gate, such as the first gate 1416, may be incorporated into the ring mold 1404 and both the midsole core and the shell materials are injected into the cavity 1420 by way of a common gate.

While injection is discussed in connection with FIGs. 14A-E, it is contemplated that casting may be used for one or more portion and/or a pre-formed portion may be inserted. Therefore, aspects contemplate a hybrid forming process for different portions of the direct attached bottom unit.

FIG. 14C depicts the core bottom plate 1410 having a bottom molding surface 1422 and a sidewall molding surface 1424 being inserted into the ring mold 1404 for forming a midsole core, in accordance with aspects hereof. As the upper 1102 is secured within the ring mold 1404, the core bottom plate 1410 is inserted into the cavity 1420 to form an enclosed volume. Material, such as a PU, TPU, EVA, or silicone-based material, may be injected through the first gate 1416 and onto the bottom surface 1422. The injected material may include a foaming agent that begins a foaming process of the material following the injection through the first gate 1416. Following the injection of the material into the cavity 1420, the core bottom plate 1410 may be moved into closer proximity to the upper 1102 (i.e., upwards in FIG. 14C) until an intended offset distance from the upper 1102 is achieved. The material may expand and foam to a net shape based on the relative position of the core bottom plate 1410 and the upper 1102. Further, the first gate 1416 may be intentionally obscured after the movement of the core bottom plate 1410. This intentional obstruction of the first gate 1416 seals the molding cavity from the exterior to achieve an intended midsole core formation.

In the non-limiting example provided in FIG. 14C and in contrast to the example that will be discussed in FIG. 14D, the bottom plate in FIG. 14C, the core bottom plate 1410, has integral sidewall molding surfaces for the midsole core. In this way, the midsole core may have a smaller footprint (e.g., less width and length) than that which would be provided by the ring mold 1404 sidewalls. Therefore, it is contemplated that the core bottom plate recesses sidewalls of the formed midsole core from the sidewalls of the shell to be formed with a common ring mold. By having a first sidewall molding surface on the core bottom plate to form sidewalls of the core and having the ring sidewalls (or a second sidewall configuration on the shell bottom plate) an encapsulation of the midsole core by the shell may be accomplished using a common ring mold, which can reduce tooling costs and increase production efficiency.

FIG. 14D depicts the shell bottom plate 1412 having a bottom molding surface 1426 being inserted into the ring mold 1404 for forming a midsole core, in accordance with aspects hereof. The midsole core 1104 was previously direct attached to the upper 1102 (e.g., as depicted in FIG. 14C) and the shell will be formed over the midsole core 1104 and on the upper 1102. A material (e.g., PUT, TPU, EVA, silicone) may be injected through the first gate 1416 into the cavity 1420 and onto the shell bottom plate 1412 at the bottom surface 1426. The shell bottom plate 1412 may then be further inserted into the cavity 1420 into closer proximity with the midsole core 1104 (i.e., upwards in FIG. 14D) to form a molding volume formed by the bottom surface 1426, the midsole core 1104, the upper 1102, and the side walls 1423 of the ring mold 1404, in an exemplary aspect. The shell bottom plate 1412 may be maintained until the shell material has cured or otherwise set sufficiently before removing the shell bottom plate 1412 from the cavity 1420.

As highlighted in connection with FIG. 14C and depicted in the cross-section of FIG. 12, having sidewall molding surfaces 1424 in the core bottom plate 1410 prevents the midsole core material from extending to the ring mold side walls 1423 at the upper 1102. Therefore, the shell material may encapsulate the midsole core 1104 and direct attach to the upper 1102 on the exterior surface 1114, as seen in FIG. 12.

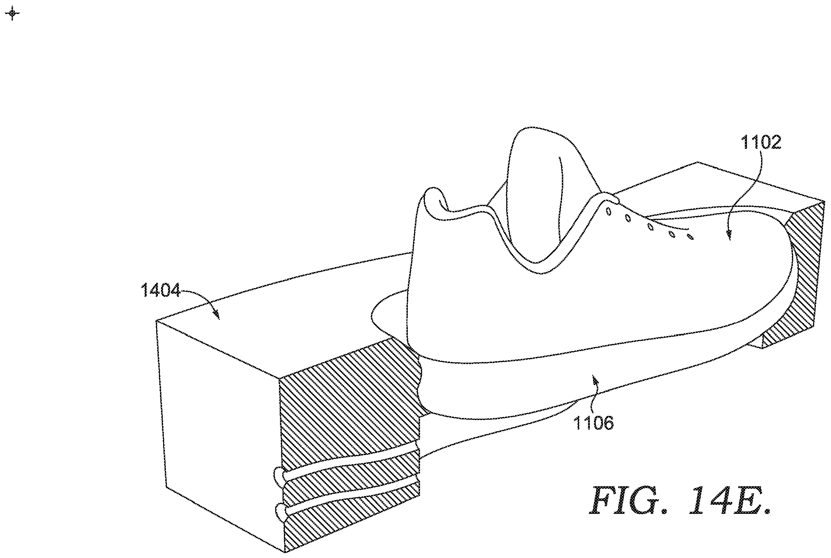

FIG. 14E depicts the article of footwear of FIGs. 8-14D having a direct-attach bottom, in accordance with aspects hereof. Specifically, the shell 1106 formed from the shell bottom plate 1412 in FIG. 14D is visible in FIG. 14E having the ring mold, the upper 1102, and the shell bottom plate defining the shell 1106.

Based on the foregoing, it is contemplated that a variety of materials are combined to form a bottom unit in a variety of manners. The following provides a non-limiting listing of contemplated material combinations for a bottom unit. It is understood that injection molding and casting may be used in different combination for different materials for the different components forming the bottom unit.

A first aspect: A TPU core and a PU shell.

A second aspect: An EVA core and a PU shell.

A third aspect: A silicone core and a PU shell.

A fourth aspect: A PU core and a TPU shell.

A fifth aspect: An EVA core and a TPU shell.

A sixth aspect: A silicone core and a TPU shell.

A seventh aspect: A PU core and an EVA shell.

An eighth aspect: A TPU core and an EVA shell.

A ninth aspect: A silicone core and an EVA shell.

A tenth aspect: A PU core and a silicone shell.

An eleventh aspect: A TPU core and a silicone shell.

A twelfth aspect: An EVA core and a silicone shell.

From the foregoing, it will be seen that the claimed invention is one well adapted to attain all the ends and objects hereinabove set forth together with other advantages which are obvious and which are inherent to the structure.

## Claims

1. A method of forming an article of footwear, the method comprising:
lasting a footwear upper (200; 204; 1102);
forming a midsole core (302; 1104) to at least an underfoot portion (210) of the footwear upper (200; 204; 1102),
wherein the midsole core (302; 1104) is direct attached to the footwear upper (200; 204; 1102) through the forming; and
forming a shell (502; 1106) to the midsole core (302; 1104) and a first portion of the footwear upper (200; 204; 1102) concurrently, wherein the shell (502; 1106) encapsulates at least a portion of the midsole core (302; 1104) forming an exterior surface on the midsole core (302; 1104),
wherein the shell (502; 1106) is formed from different materials than the midsole core (302; 1104),
wherein the shell (502; 1106) over molds both the midsole core (302; 1104) and the first portion of the footwear upper (200; 204; 1102) to a biteline (510) that represents a transition from the shell (502; 1106) to the footwear upper (200; 204; 1102) forming an exterior surface of the article of footwear,
wherein the shell (502; 1106) extends from the exterior surface of the midsole core (302; 1104), past a second portion of the footwear upper (200; 204; 1102) that at least partly defines an inferior portion of an internal cavity, to the biteline (510),
wherein the biteline (510) forms a continuous perimeter around the article of footwear and is spaced from the underfoot portion (210) of the footwear upper (200; 204; 1102), and
wherein the shell (502; 1106) extends around and forms a perimeter of the article of footwear along a toe end, a medial side (604), a heel end, and a lateral side (602).

2. The method of forming an article of footwear of claim 1 further comprising inserting the lasted upper (200; 204; 1102) into a first tooling prior to forming the midsole core (302; 1104); and, optionally,
wherein, the method of forming an article of footwear further comprises transferring the lasted upper (200; 204; 1102) and the midsole core (302; 1104) from the first tooling to a second tooling prior to forming the shell (502; 1106);
or
wherein, the method of forming an article of footwear further comprises maintaining the lasted upper (200; 204; 1102) in the first tooling while forming the shell (502; 1106).

3. The method of forming an article of footwear according to any one of claims 1 to 2, wherein forming the midsole core comprises casting material forming the midsole core (302; 1104).

4. The method of forming an article of footwear according to any one of claims 1 to 3, wherein forming the midsole core comprises injecting material into tooling to form the midsole core (302; 1104).

5. The method of forming an article of footwear according to any one of claims 1 to 4, wherein forming the midsole core (302; 1104) to the at least underfoot portion (210) of the footwear upper (200; 204; 1102) comprises the midsole core (302; 1104) mechanically engaging with the footwear upper (200; 204; 1102).

6. The method of forming an article of footwear according to any one of claims 1 to 5, wherein the midsole core (302; 1104) is direct attached to the footwear upper (200; 204; 1102) without an adhesive.

7. The method of forming an article of footwear according to any one of claims 1 to 6, wherein the midsole core (302; 1104) is comprised of at least one selected from PU, TPU, EVA, and silicone; and/or
wherein the shell (502; 1106) is comprised of at least one selected from PU, TPU, EVA, and silicone.

8. The method of forming an article of footwear according to any one of claims 1 to 7, wherein the midsole core (302; 1104) has a lower density than the shell (502; 1106).

9. The method of forming an article of footwear according to any one of claims 1 to 8, wherein the midsole core (302; 1104) is comprised of a first material and the shell (502; 1106) is comprised of a second material, wherein the first material has a higher resilience than the second material.

10. The method of forming an article of footwear according to any one of claims 1 to 9, wherein forming the shell (502; 1106) comprises casting material forming the shell (502; 1106); and/or
wherein forming the shell comprises injecting material forming the shell (502; 1106) into a tooling.

11. The method of forming an article of footwear according to any one of claims 1 to 10, wherein the shell (502; 1106) has a greater abrasion resistance than the midsole core (302; 1104).

12. An article of footwear comprising:
an upper (200; 204; 1102) having an underfoot portion (210);
a midsole core (302; 1104) adjacent to the upper (200; 204; 1102) at the underfoot portion (210); and
a shell (502; 1106), the shell encapsulates the midsole core (302; 1104) and mechanically engages with the upper (200; 204; 1102),
wherein the shell (502; 1106) forms a ground-contacting surface of the article of footwear,
wherein the shell (502; 1106) is formed from different materials than the midsole core (302; 1104),
wherein the shell (502; 1106) over molds both the midsole core (302; 1104) and a first portion of the upper (200; 204; 1102) to a biteline (510) that represents a transition from the shell (502; 1106) to the footwear upper (200; 204; 1102) forming an exterior surface of the article of footwear,
wherein the shell (502; 1106) extends from an exterior surface of the midsole core (302; 1104), past a second portion of the footwear upper (200; 204; 1102) that at least partly defines an inferior portion of an internal cavity, to the biteline (510),
wherein the biteline (510) forms a continuous perimeter around the article of footwear and is spaced from the underfoot portion (210) of the footwear upper (200; 204; 1102), and
wherein the shell (502; 1106) extends around and forms a perimeter of the article of footwear along a toe end, a medial side (604), a heel end, and a lateral side (602).

13. The article of footwear of claim 12, wherein the midsole core (302; 1104) is comprised of at least one selected from PU, TPU, EVA, and silicone;
and/or
wherein the midsole core has a lower density than the shell.

14. The article of footwear according to any one of claims 12 to 13, wherein the midsole core (302; 1104) is comprised of a first material and the shell (502; 1106) is comprised of a second material, wherein the first material has a higher resilience than the second material.

15. The article of footwear according to any one of claims 12 to 14, wherein the midsole core has a density less than 0.25 grams per cubic centimeter.

## Patentansprüche

1. Verfahren zum Bilden eines Schuhwerkartikels, wobei das Verfahren umfasst:
Aufleisten eines Schuhwerkoberteils (200; 204; 1102);
Bilden eines Zwischensohlenkerns (302; 1104) an zumindest einen bzw. einem Unterfußabschnitt (210) des Schuhwerkoberteils (200; 204; 1102),
wobei der Zwischensohlenkern (302; 1104) durch das Formen bzw. Bilden direkt an dem Schuhoberteil (200; 204; 1102) befestigt wird; und
Bilden einer Schale (502; 1106) an den bzw. dem Zwischensohlenkern (302; 1104) und eines ersten Abschnitts des Schuhwerkoberteils (200; 204; 1102) gleichzeitig, wobei die Schale (502; 1106) zumindest einen Teil des Zwischensohlenkerns (302; 1104) einkapselt, der eine äußere Fläche bzw. Oberfläche an dem Zwischensohlenkern (302; 1104) bildet,
wobei die Schale (502; 1106) aus anderen Materialien als der Zwischensohlenkern (302; 1104) gebildet wird,
wobei die Schale (502; 1106) sowohl den Zwischensohlenkern (302; 1104) als auch den ersten Abschnitt des Schuhwerkoberteils (200; 204; 1102) bis zu einer Bisslinie (510) überformt, die einen Übergang von der Schale (502; 1106) zu dem Schuhwerkoberteil (200; 204; 1102) darstellt, was eine äußere Fläche bzw. Oberfläche des Schuhwerks bildet,
wobei sich die Schale (502; 1106) von der äußeren Oberfläche des Zwischensohlenkerns (302; 1104) vorbei an einem zweiten Abschnitt des Schuhwerkoberteils (200; 204; 1102), der zumindest teilweise einen inferioren bzw. unteren Abschnitt eines inneren Hohlraums definiert, bis zu der Bisslinie (510) erstreckt,
wobei die Bisslinie (510) einen durchgehenden Umfang um den Schuhwerkartikel herum bildet und von dem Unterfußabschnitt (210) des Schuhwerkoberteils (200; 204; 1102) beabstandet ist, und
wobei sich die Schale (502; 1106) entlang einem Zehenende, einer medialen Seite (604), einem Fersenende und einer lateralen Seite (602) um den Schuhwerkartikel herum erstreckt und einen Umfang davon bildet.

2. Verfahren zum Bilden eines Schuhwerkartikels nach Anspruch 1, ferner umfassend ein Einsetzen des aufgeleisteten Oberteils (200; 204; 1102) in ein erstes Werkzeug vor dem Bilden des Zwischensohlenkerns (302; 1104); und optional
wobei das Verfahren zum Bilden eines Schuhwerkartikels ferner ein Übertragen des aufgeleisteten Oberteils (200; 204; 1102) und des Zwischensohlenkerns (302; 1104) von dem ersten Werkzeug zu einem zweiten Werkzeug vor dem Bilden der Schale (502; 1106) umfasst;
oder
wobei das Verfahren zum Bilden eines Schuhwerkartikels ferner ein Halten des aufgeleisteten Oberteils (200; 204; 1102) in dem ersten Werkzeug umfasst, während die Schale (502; 1106) gebildet wird.

3. Verfahren zum Bilden eines Schuhwerkartikels nach einem der Ansprüche 1 bis 2, wobei das Bilden des Zwischensohlenkerns ein Gießen von Material umfasst, das den Zwischensohlenkern (302; 1104) bildet.

4. Verfahren zum Bilden eines Schuhwerkartikels nach einem der Ansprüche 1 bis 3, wobei das Bilden des Zwischensohlenkerns ein Einspritzen von Material in ein Werkzeug zum Bilden des Zwischensohlenkerns (302; 1104) umfasst.

5. Verfahren zum Bilden eines Schuhwerkartikels nach einem der Ansprüche 1 bis 4, wobei das Bilden des Zwischensohlenkerns (302; 1104) zumindest an den bzw. dem Unterfußabschnitt (210) des Schuhwerkoberteils (200; 204; 1102) umfasst, dass der Zwischensohlenkern (302; 1104) mechanisch mit dem Schuhwerkoberteil (200; 204; 1102) in Eingriff kommt bzw. steht.

6. Verfahren zum Bilden eines Schuhwerkartikels nach einem der Ansprüche 1 bis 5, wobei der Zwischensohlenkern (302; 1104) ohne Klebstoff direkt an dem Schuhwerkoberteil (200; 204; 1102) angebracht wird.

7. Verfahren zum Bilden eines Schuhwerkartikels nach einem der Ansprüche 1 bis 6, wobei der Zwischensohlenkern (302; 1104) aus zumindest einem ausgewählt aus PU, TPU, EVA und Silikon besteht; und/oder wobei die Schale (502; 1106) aus zumindest einem ausgewählt aus PU, TPU, EVA und Silikon besteht.

8. Verfahren zum Bilden eines Schuhwerkartikels nach einem der Ansprüche 1 bis 7, wobei der Zwischensohlenkern (302; 1104) eine geringere Dichte als die Schale (502; 1106) aufweist.

9. Verfahren zum Bilden eines Schuhwerkartikels nach einem der Ansprüche 1 bis 8, wobei der Zwischensohlenkern (302; 1104) aus einem ersten Material besteht und die Schale (502; 1106) aus einem zweiten Material besteht, wobei das erste Material ein höheres Rückstellvermögen als das zweite Material aufweist.

10. Verfahren zum Bilden eines Schuhwerkartikels nach einem der Ansprüche 1 bis 9, wobei das Bilden der Schale (502; 1106) ein Gießen von Material umfasst, das die Schale (502; 1106) bildet; und/oder
wobei das Bilden der Schale ein Einspritzen von Material, das die Schale (502; 1106) bildet, in ein Werkzeug umfasst.

11. Verfahren zum Bilden eines Schuhwerkartikels nach einem der Ansprüche 1 bis 10, wobei die Schale (502; 1106) eine größere Abriebfestigkeit als der Zwischensohlenkern (302; 1104) aufweist.

12. Schuhwerkartikel, umfassend:
ein Oberteil (200; 204; 1102) mit einem Unterfußabschnitt (210);
einen Zwischensohlenkern (302; 1104) angrenzend an das bzw. benachbart zu dem Oberteil (200; 204; 1102) an dem Unterfußabschnitt (210); und
eine Schale (502; 1106), wobei die Schale den Zwischensohlenkern (302; 1104) einkapselt und mechanisch mit dem Schaft (200; 204; 1102) in Eingriff ist,
wobei die Schale (502; 1106) eine Bodenkontaktfläche bzw. -oberfläche des Schuhwerkartikels bildet,
wobei die Schale (502; 1106) aus anderen Materialien als der Zwischensohlenkern (302; 1104) gebildet ist,
wobei die Schale (502; 1106) sowohl den Zwischensohlenkern (302; 1104) als auch einen ersten Abschnitt des Oberteils (200; 204; 1102) bis zu einer Bisslinie (510) überformt, die einen Übergang von der Schale (502; 1106) zu dem Schuhwerkoberteil (200; 204; 1102) darstellt, das eine äußere Fläche bzw. Oberfläche des Schuhwerkartikels bildet,
wobei sich die Schale (502; 1106) von einer äußeren Fläche bzw. Oberfläche des Zwischensohlenkerns (302; 1104) vorbei an einem zweiten Abschnitt des Schuhwerkoberteils (200; 204; 1102), der zumindest teilweise einen inferioren bzw. unteren Abschnitt eines inneren Hohlraums definiert, bis zu der Bisslinie (510) erstreckt,
wobei die Bisslinie (510) einen durchgehenden Umfang um den Schuhwerkartikel herum bildet und von dem Unterfußabschnitt (210) des Schuhwerkoberteils (200; 204; 1102) beabstandet ist, und
wobei sich die Schale (502; 1106) entlang einem Zehenende, einer medialen Seite (604), einem Fersenende und einer lateralen Seite (602) um den Schuhwerkartikel herum erstreckt und einen Umfang davon bildet.

13. Schuhwerkartikel nach Anspruch 12, wobei der Zwischensohlenkern (302; 1104) aus zumindest einem ausgewählt aus PU, TPU, EVA und Silikon besteht; und/oder
wobei der Zwischensohlenkern eine geringere Dichte als die Schale aufweist.

14. Schuhwerkartikel nach einem der Ansprüche 12 bis 13, wobei der Zwischensohlenkern (302; 1104) aus einem ersten Material besteht und die Schale (502; 1106) aus einem zweiten Material besteht, wobei das erste Material ein höheres Rückstellvermögen als das zweite Material aufweist.

15. Schuhwerkartikel nach einem der Ansprüche 12 bis 14, wobei der Zwischensohlenkern eine Dichte von weniger als 0,25 Gramm pro Kubikzentimeter aufweist.

## Revendications

1. Procédé de formage d'un article chaussant, le procédé comprenant :
monter une tige de chaussure (200 ; 204 ; 1102) ;
former un noyau de semelle intercalaire (302 ; 1104) sur au moins une portion de dessous de pied (210) de la tige de chaussure (200 ; 204 ; 1102),
dans lequel le noyau de semelle intercalaire (302 ; 1104) est directement relié à la tige de chaussure (200 ; 204 ; 1102) par le formage ; et
former une coque (502 ; 1106) sur le noyau de semelle intercalaire (302 ; 1104) et une première portion de la tige de chaussure (200 ; 204 ; 1102) de manière concomitante, dans lequel la coque (502 ; 1106) encapsule au moins une portion du noyau de semelle intercalaire (302 ; 1104) formant une surface extérieure sur le noyau de semelle intercalaire (302 ; 1104),
dans lequel la coque (502 ; 1106) est formée de matières différentes du noyau de semelle intercalaire (302 ; 1104),
dans lequel la coque (502 ; 1106) surmoule à la fois le noyau de semelle intercalaire (302 ; 1104) et la première portion de la tige de chaussure (200 ; 204 ; 1102) sur une ligne de morsure (510) qui représente une transition de la coque (502 ; 1106) à la tige de chaussure (200 ; 204 ; 1102) formant une surface extérieure de l'article chaussant,
dans lequel la coque (502 ; 1106) s'étend de la surface extérieure du noyau de semelle intercalaire (302 ; 1104), au-delà d'une seconde portion de la tige de chaussure (200 ; 204; 1102) qui définit au moins partiellement une portion inférieure d'une cavité interne, à la ligne de morsure (510),
dans lequel la ligne de morsure (510) forme un périmètre continu autour de l'article chaussant et est espacée de la portion de dessous de pied (210) de la tige de chaussure (200 ; 204 ; 1102), et
dans lequel la coque (502 ; 1106) s'étend autour et forme un périmètre de l'article chaussant le long d'une extrémité d'orteil, d'un côté médial (604), d'une extrémité de talon et d'un côté latéral (602).

2. Procédé de formage d'un article chaussant selon la revendication 1, comprenant en outre insérer la tige montée (200 ; 204 ; 1102) dans un premier outillage avant de former le noyau de semelle intercalaire (302 ; 1104) ; et, en option,
dans lequel le procédé de formage d'un article chaussant comprend en outre transférer la tige montée (200 ; 204 ; 1102) et le noyau de semelle intercalaire (302 ; 1104) du premier outillage à un second outillage avant de former la coque (502 ; 1106) ;
ou
dans lequel le procédé de formage d'un article chaussant comprend en outre maintenir la tige montée (200 ; 204 ; 1102) dans le premier outillage tout en formant la coque (502 ; 1106).

3. Procédé de formage d'un article chaussant selon l'une quelconque des revendications 1 à 2, dans lequel former le noyau de semelle intercalaire comprend couler de la matière formant le noyau de semelle intercalaire (302 ; 1104).

4. Procédé de formage d'un article chaussant selon l'une quelconque des revendications 1 à 3, dans lequel former le noyau de semelle intercalaire comprend injecter de la matière dans de l'outillage pour former le noyau de semelle intercalaire (302 ; 1104).

5. Procédé de formage d'un article chaussant selon l'une quelconque des revendications 1 à 4, dans lequel former le noyau de semelle intercalaire (302 ; 1104) sur l'au moins une portion de dessous de pied (210) de la tige de chaussure (200 ; 204 ; 1102) comprend le noyau de semelle intercalaire (302 ; 1104) s'engageant mécaniquement avec la tige de chaussure (200 ; 204 ; 1102).

6. Procédé de formage d'un article chaussant selon l'une quelconque des revendications 1 à 5, dans lequel le noyau de semelle intercalaire (302 ; 1104) est directement relié à la tige de chaussure (200 ; 204 ; 1102) sans adhésif.

7. Procédé de formage d'un article chaussant selon l'une quelconque des revendications 1 à 6, dans lequel le noyau de semelle intercalaire (302 ; 1104) est constitué d'au moins une matière sélectionnée parmi le PU, TPU, EVA et silicone ; et/ou
dans lequel la coque (502 ; 1106) est constituée d'au moins une matière sélectionnée parmi le PU, TPU, EVA et silicone.

8. Procédé de formage d'un article chaussant selon l'une quelconque des revendications 1 à 7, dans lequel le noyau de semelle intercalaire (302 ; 1104) a une densité inférieure à la coque (502 ; 1106).

9. Procédé de formage d'un article chaussant selon l'une quelconque des revendications 1 à 8, dans lequel le noyau de semelle intercalaire (302 ; 1104) est constitué d'une première matière et la coque (502 ; 1106) est constituée d'une seconde matière, dans lequel la première matière a une résilience supérieure à la seconde matière.

10. Procédé de formage d'un article chaussant selon l'une quelconque des revendications 1 à 9, dans lequel former la coque (502 ; 1106) comprend couler de la matière formant la coque (502 ; 1106) ; et/ou
dans lequel former la coque comprend injecter de la matière formant la coque (502 ; 1106) dans un outillage.

11. Procédé de formage d'un article chaussant selon l'une quelconque des revendications 1 à 10, dans lequel la coque (502 ; 1106) a une résistance à l'abrasion supérieure au noyau de semelle intercalaire (302 ; 1104).

12. Article chaussant comprenant :
une tige (200 ; 204 ; 1102) ayant une portion de dessous de pied (210) ;
un noyau de semelle intercalaire (302 ; 1104) adjacent à la tige (200 ; 204 ; 1102) au niveau de la portion de dessous de pied (210) ; et
une coque (502 ; 1106), la coque encapsule le noyau de semelle intercalaire (302 ; 1104) et s'engage mécaniquement avec la tige (200 ; 204 ; 1102),
dans lequel la coque (502 ; 1106) forme une surface venant en contact avec le sol de l'article chaussant,
dans lequel la coque (502 ; 1106) est formée de matières différentes du noyau de semelle intercalaire (302 ; 1104),
dans lequel la coque (502 ; 1106) surmoule à la fois le noyau de semelle intercalaire (302 ; 1104) et une première portion de la tige (200 ; 204 ; 1102) sur une ligne de morsure (510) qui représente une transition de la coque (502 ; 1106) à la tige de chaussure (200 ; 204 ; 1102) formant une surface extérieure de l'article chaussant,
dans lequel la coque (502 ; 1106) s'étend d'une surface extérieure du noyau de semelle intercalaire (302 ; 1104), au-delà d'une seconde portion de la tige de chaussure (200 ; 204; 1102) qui définit au moins partiellement une portion inférieure d'une cavité interne, à la ligne de morsure (510),
dans lequel la ligne de morsure (510) forme un périmètre continu autour de l'article chaussant et est espacée de la portion de dessous de pied (210) de la tige de chaussure (200 ; 204 ; 1102), et
dans lequel la coque (502 ; 1106) s'étend autour et forme un périmètre de l'article chaussant le long d'une extrémité d'orteil, d'un côté médial (604), d'une extrémité de talon et d'un côté latéral (602).

13. Article chaussant selon la revendication 12, dans lequel le noyau de semelle intercalaire (302 ; 1104) est constitué d'au moins une matière sélectionnée parmi le PU, TPU, EVA et silicone ;
et/ou
dans lequel le noyau de semelle intercalaire a une densité inférieure à la coque.

14. Article chaussant selon l'une quelconque des revendications 12 à 13, dans lequel le noyau de semelle intercalaire (302 ; 1104) est constitué d'une première matière et la coque (502 ; 1106) est constituée d'une seconde matière, dans lequel la première matière a une résilience supérieure à la seconde matière.

15. Article chaussant selon l'une quelconque des revendications 12 à 14, dans lequel le noyau de semelle intercalaire a une densité inférieure à 0,25 gramme par centimètre cube.
